# EUROPÄISCHE PATENTANMELDUNG

(11) **EP 1 426 783 A1**
(43) Veröffentlichungstag der Anmeldung: **09.06.2004**
(21) Anmeldenummer: 03027251.2
(22) Anmeldetag: 28.11.2003
(51) Int. Cl.: G01S 7/497

(54) **Verfahren und Anordnung zum Messen eines modulierten Lichtsignals**

(30) Priorität: 02.12.2002 DE 10256429
(71) Anmelder: Reime, Gerd, 75328 Schömberg (DE)
(72) Erfinder: Reime, Gerd, 75328 Schömberg (DE)
(74) Vertreter: Reinhardt, Harry

(57) **Zusammenfassung**

In optischen Systemen zur Messung eines reflektierten modulierten Lichtstrahles führt die Alterung und Temperaturabhängigkeit von optischen Komponenten, z.B. Leuchtdioden (10,12) sowie der Einfluss von Fremdlicht, zu langfristigen Veränderungen der Messwerte. Zur Eliminierung der Alterungs- und Temperatureffekte wird das empfangene modulierte Lichtsignal mit einem zweiten, ständig nachgeregelten und um 180° versetzt modulierten Lichtsignal so kompensiert, dass an der Photodiode (1) stets nur ein Gleichlichtsignal ohne Modulationsanteile ansteht. Dem der LED zugeführten, zur Erzeugung der kompensierenden modulierten Lichtleistung benötigten Strom wird ein zweiter, vorzugsweise nicht modulierter Strom zugeführt. Dieser zweite Strom wird mittels einer Regelung so bemessen, dass der zeitliche Mittelwert des Stroms der sendenden LED (10) und der zeitliche Mittelwert des Stroms der kompensierenden LED (12) stets gleich groß sind. Dadurch wird die Alterung und Temperaturabhängigkeit des sendenden Elementes kompensiert. Des weiteren entfällt bei dieser Schaltungsanordnung auch der Temperatur- und Alterungseinfluss der Photodiode. Mit dieser Schaltungsanordnung lässt sich somit ein vollständig von Alterungs-, Temperatur- und Fremdlichteinflüssen befreites optisches Messsystem realisieren.

## Beschreibung

Die Erfindung betrifft ein Verfahren und eine Anordnung zum Messen eines modulierten Lichtsignals, insbesondere mit das Lichtsignal aussendenden Leuchtdioden nach dem Oberbegriff der Ansprüche 1 oder 8. Der Begriff Leuchtdiode wird im Rahmen dieser Anmeldung allerdings als Synonym für Lichtquellen verwendet, die alterungs- und/oder temperaturabhängig ihre Eigenschaften verändern. Anstelle von Leuchtdioden kann insofern insbesondere auch eine Laser-Diode oder ein Laser verwendet werden.

Anordnung und Verfahren werden im Folgenden im Hinblick auf eine Messanordnung beschrieben, die z.B. einen Belag auf einer Scheibe erfassen kann, wie er z.B. auf einer Windschutzscheibe eines Fahrzeugs auftreten kann. Dieses Beispiel beschränkt jedoch nicht die Anwendungsmöglichkeiten des Systems, da das Verfahren und die Anordnung auch für jeden beliebigen Einsatz eines optischen Messsystems eingesetzt werden kann.

Optische Messsysteme wie z.B. Reflexionssensoren arbeiten nach dem Prinzip der gepulsten Lichtaussendung unter Reflexion und Empfang des reflektierten Signals. Ähnliches gilt für das Transmissionsprinzip. Bei gleichbleibender Reflexion bzw. Transmission treten drei Störgrößen besonders in Erscheinung:
- Umgebungslichteinflüsse auf das Empfangssignal
- Alterung der LED und der Photodiode
- Temperaturabhängigkeit der LED und der Photodiode

Fremdlicht beeinflusst die Sensitivität einer Photodiode dergestalt, dass hohe Lichtintensitäten, z.B. direkte Sonneneinstrahlung in die Photodiode, das Empfangssignal eines pulsförmigen Sendesignals in der Amplitude beeinflussen. Dieser Fremdlichteffekt tritt auch bei entsprechender Photostromkompensation, bzw. nachgeregelter Stabilisierung der Photodiode in Erscheinung. Der Amplitudenfehler eines gepulsten Signals zwischen schwacher Umgebungsbeleuchtung und vollem Sonnenlicht (> 100 kLux) kann mehr als 15 % betragen. Der Fremdlichteinfluss macht sich besonders dann bemerkbar, wenn ein Teil des ausgesendeten Signals an Reflektionsstellen wie Kratzern, Schmutz oder Fingerabdrücken eines für Sender und Empfänger ggf. gemeinsam vorhandenen optischen Fensters reflektiert wird. Dieses dann bereits vorhandene Empfangssignal kann durch Fremdlicht in der Amplitude beeinflusst werden. Dadurch wird eine Annäherung eines reflektierenden Gegenstandes vorgetäuscht. Bei einem Annäherungsschalter würde dadurch eventuell eine Fehlfunktion ausgelöst.

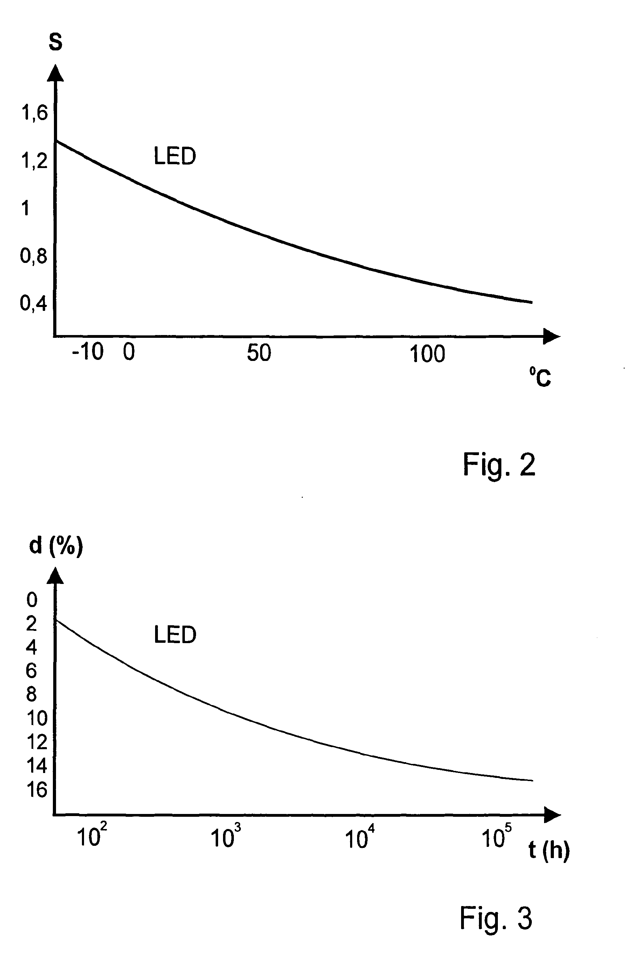

Im Gegensatz zu diesen Fremdlichteinflüssen, die auch plötzlich auftreten können, macht sich in der Regel ein Temperaturfehler von LED und/oder Photodiode nur in größeren Zeitabschnitten von z.B. mehreren Minuten, bemerkbar. Fig. 2 zeigt das typische Temperaturverhalten einer LED. Der Temperatureinfluß auf die LED wirkt sich so aus, dass bei Erwärmung der LED in der Regel die Sendeleistung S abnimmt. Dabei ist es gleichgültig, ob die LED durch äußere Einflüsse oder durch den Betriebsstrom erwärmt wird. Gleiches gilt analog für eine Photodiode. Bei zunehmender Temperatur nimmt die Empfangsleistung ab. Für einen Einsatz mit einem beispielhaften Temperaturumfang von - 20 °C bis + 120°C verändert sich die empfangene Reflexionsleistung im Verhältnis von z.B. > 4 : 1.

Bei einer dynamischen Messung, die nur kurzzeitige Reflexionsänderungen berücksichtigt, kann eine langsame Änderung des Ausgangssignals durch entsprechende elektronische Maßnahmen korrigiert oder ignoriert werden. Soll z.B. die Annäherung einer Hand an eine optische Reflexionslichtschranke detektiert werden, um z.B. eine Beleuchtung einzuschalten, kann ein Schwellwert zur Annäherungsdetektion durchaus langsam nachgeführt werden. Langsame Änderungen des Reflexionssignals werden dadurch nicht berücksichtigt, sondern nur die schnelle Änderung der sich nähernden Hand. Bei einer gewünschten absoluten Messung dagegen hat der Temperaturgang deutlichen Einfluss auf die Messung. Eine genaue Bestimmung des reflektierten Lichts, z.B. zur Bestimmung eines Belages auf einer Scheibe, kann im herkömmlichen Verfahren nur mit besonderen Maßnahmen zur Stabilisierung der Umgebungstemperatur durchgeführt werden. Hierbei wird allerdings die Alterung der optischen Komponenten nicht berücksichtigt.

Der Effekt der Alterung der optischen Komponenten ist ein weiterer, wesentlich langfristigerer Effekt. Mit zunehmenden Alter nimmt die Ausgangsleistung d einer LED in der Regel ab.
Fig. 3 zeigt eine typische Alterungskurve einer z.B. mit 50 mA betriebenen Leuchtdiode. Abhängig vom verwendeten LED-Typ, der Umgebungstemperatur und dem LED-Strom kann mit einer Abnahme der Sendeleistung nach z.B. 10⁴ Stunden auf z.B. 70% trotz der bereits bei der Produktion erfolgenden Voralterung gerechnet werden.

Zusammenfassend ist derzeit ein optisches System, das z.B. das Reflexionsprinzip verwendet, nur äußerst schlecht für genaue Absolutwertmessungen einzusetzen. Dies wird jedoch verlangt, wenn unter verschiedensten Umgebungsbedingungen z.B. ein Belag, der sich nur sehr langsam auf einer zu erfassenden Fläche bildet, optisch erfasst werden soll.

Aus der dem Oberbegriff der unabhängigen Ansprüche zugrunde liegenden DE 100 01 955 A1 oder der älteren Patentanmeldung DE 101 33 823 ist eine Kompensation des empfangenen Lichtsignals einer Lichtreflexionsstrecke bekannt, bei der die Wechselanteile des empfangenen Lichtsignals ständig zu Null geregelt werden. Dabei wird während der Sendepausen des Sendesignals mit einer zweiten Leuchtdiode über eine zweite Lichtstrecke der Photodiode so viel Licht zugeführt, das an der Photodiode nur ein konstantes Gleichlichtsignal anliegt. Das Nutzsignal ist nicht mehr das Signal der Photodiode, sondern das Regelsignal der zweiten, kompensierenden Leuchtdiode. Der Vorteil dieser Schaltung liegt in der vollständigen Unempfindlichkeit gegenüber Fremdlicht. In dieser Schaltungsanordnung hat auch die Photodiode und der nachfolgende Verstärker keinen Einfluss auf die Messung. Somit lässt sich mit dieser Schaltungsanordnung das erste der drei genannten Probleme, nämlich die Fremdlichtproblematik lösen.

Da in der Regel die Kompensations-LED nur einen kleinen Teil des von der Sende-LED ausgesandten Lichts kompensieren muss, wird sie in der oben beschriebenen Schaltung auch nur mit einer geringeren Leistung betrieben als die Sendediode. Dies führt in erster Linie zu einer unterschiedlichen Alterung der Leuchtdioden. Eine schnellere Alterung der Sende-LED gegenüber der Kompensations-LED führt langfristig jedoch zu einer Veränderung der Kompensationsleistung und somit zu einem Fehler im Ausgangssignal.

Alterungskurven unterschiedlicher Leuchtdioden sind aus der Literatur hinreichend bekannt. Die Alterung hängt vom Typ der LED, dem Strom und der Chiptemperatur ab. Eine LED altert schneller, je höher der Stromfluss , bzw. die Umgebungstemperatur ist.

Eine Methode, diese Alterung zu egalisieren, besteht in der Abschattung der Kompensations-LED in dem Maße, dass sie bei gleich starker Abstrahlung, also gleichen Strom wie die Sende-LED, betrieben wird. Durch die Abschattung wird nur so viel Licht auf die Photodiode gegeben, wie für ein vollständiges Unterdrücken des Wechselanteils des Empfangssignals benötigt wird. Hierbei wird jedoch nicht berücksichtigt, dass die Reflexionseigenschaften des zu messenden Objektes sich ja möglicherweise ändern und somit auch die Kompensations-LED in ihrer Leistung nachgeregelt werden muss. Dies führt wieder zu unterschiedlichen Strömen und somit zu einer unterschiedlichen Alterung.

Ausgehend von diesem Stand der Technik liegt der vorliegenden Erfindung die Aufgabe zu Grunde, ein Verfahren und eine Anordnung zum Messen eines modulierten Lichtsignals zu schaffen, die auch bei sich ändernden Umweltbedingungen stabil zu betreiben sind.

Diese Aufgabe wird durch ein Verfahren und eine Anordnung zum Messen eines modulierten Lichtsignals mit den Merkmalen der Ansprüche 1 oder 8 gelöst.

Dieses optische Messsystem nimmt die oben genannten Probleme im Wesentlichen nicht wahr, das heißt, das System ist vor allem temperaturstabil und alterungsstabil. Zu diesem Zweck werden die Leuchtdioden innerhalb des Systems, zumindest soweit sie im selben Aufgabenbereich eingesetzt werden, gleichmäßig gealtert, indem ihnen im Wesentlichen der gleiche Strom zumindest dem zeitlichen Mittelwert nach zugeführt wird. Hierzu wird der zeitliche Mittelwert des Stroms, der zur Erzeugung des weiteren modulierten Lichtsignals erforderlich ist, und/oder der zeitliche Mittelwert desjenigen Stroms, der der wenigstens einen Leuchtdiode zugeführt wird, so verändert, dass sich die zeitlichen Mittelwerte im Wesentlichen entsprechen. Bedarfsweise kann in einer weiteren Ausführungsform auch ein gepulster Strom zugeführt werden, falls es auf eine gleichmäßige Spitzenleistung ankommt, sofern dieser Strom vorzugsweise in den Messpausen zugeführt wird.

LEDs, besonders wenn sie aus der gleichen Charge stammen, zeigen gleiche Alterungskurven, wenn sie unter gleichen Umgebungsbedingungen betrieben werden. Als Strom durch eine Leuchtdiode kann ein Gleichstrom sowie in bestimmten Grenzen der Durchschnittswert eines pulsförmigen Stromes angenommen werden. Letzteres gilt für Pulsfrequenzen, bei denen im Durchschnitt keine wesentlichen Wärmesprünge im LED-Chip zwischen Puls und Pause auftreten. Dies ist in der Regel ab einer Frequenz von ca. 10 kHz zu erwarten.

Bei einer Ausgestaltung nach den Ansprüchen 6 oder 12 kann zudem die Regeldynamik an den tatsächlich maßgebenden Signalbereich dadurch angepasst werden, dass ein fester Wert dem für die Kompensation erforderlichen Regelsignal überlagert wird. Damit "konzentriert sich" das System nicht auf einen ggf. statischen Wert zur Kompensation einer ersten, nicht veränderlichen Reflexion, sondern stimmt sich für die eigentliche Regelung auf die kleineren maßgeblichen Reflexionsänderungen ein.

Weitere Vorteile ergeben sich aus den weiteren Ansprüchen und der folgenden Beschreibung.

Im Folgenden wird die Erfindung an Hand von in den Figuren dargestellten Ausführungsbeispielen näher erläutert. Es zeigen:
- Fig. 1: einen erfindungsgemäßen Schaltplan mit optischer Regelschleife für Alterungs- und Temperaturkompensation,
- Fig. 2: das typische Temperaturverhalten der Strahlungsintensität S einer Leuchtdiode,
- Fig. 3: eine typische Alterungskurve einer Leuchtdiode mit der Abnahme d der Strahlungsleistung über der Zeit t.

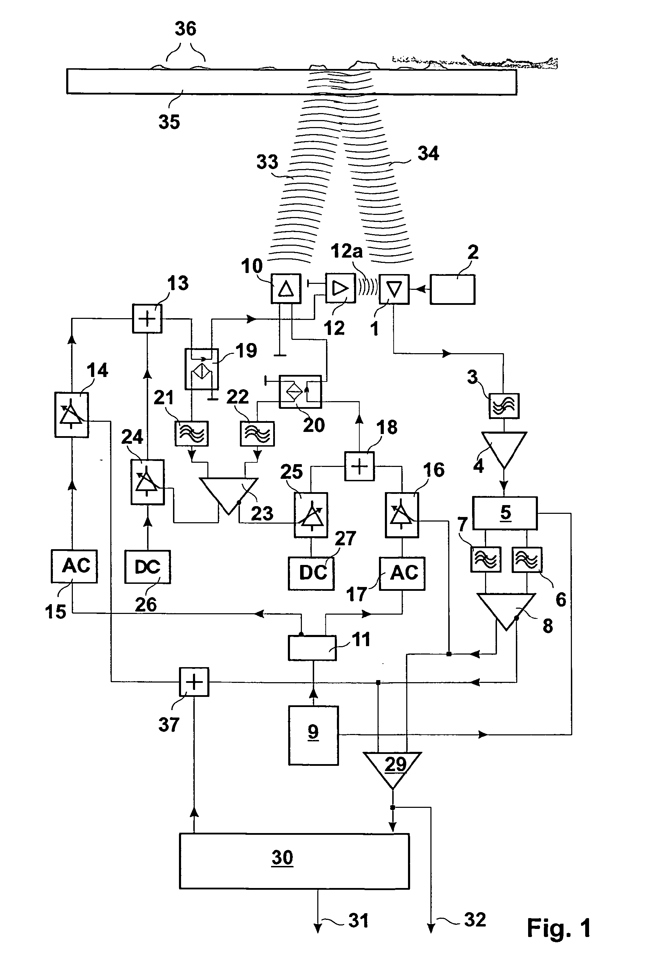

Figur 1 zeigt einen Schaltplan zur Eliminierung von alterungs- und temperaturabhängigen Änderungen optischer Meßsysteme, die insbesondere nach dem Reflexions- oder Transmissionsprinzip zum Messen eines modulierten Lichtsignals arbeiten. Anordnung und Verfahren werden im Folgenden im Hinblick auf eine Messanordnung beschrieben, die z.B. einen Belag 36 auf einer Scheibe 35 erfassen kann, wie er z.B. auf einer Windschutzscheibe eines Fahrzeugs auftreten kann. Dieses Beispiel beschränkt jedoch nicht die Anwendungsmöglichkeiten des Systems, da das gleiche Verfahren und dieselbe Anordnung auch für jeden beliebigen anderen Einsatz eines derartigen Messsystems eingesetzt werden kann.

Wenigstens eine - ggf. aber auch mehrere -, das modulierte Lichtsignal aussendende Leuchtdioden 10 und wenigstens ein Empfänger 1 sind zum Empfang des Lichtsignals vorgesehen. Das Lichtsignal der Leuchtdioden wird mit einem weiteren modulierten Lichtsignal so kompensiert, dass am Empfänger 1 im Wesentlichen ein Gleichlichtsignal ansteht. Dabei wird, wie im Folgenden noch erläutert wird, der zeitliche Mittelwert des Stroms, der zur Erzeugung des weiteren modulierten Lichtsignals erforderlich ist, und/oder der zeitliche Mittelwert desjenigen Stroms, der der wenigstens einen Leuchtdiode 10 zugeführt wird, so verändert, dass sich die zeitlichen Mittelwerte im Wesentlichen entsprechen. Um dies zu erreichen, wird zu dem Strom, der der wenigstens einen Leuchtdiode 12 zugeführt wird, ein zweiter Strom hinzuaddiert. Im Ausführungsbeispiel ist die wenigstens eine Leuchtdiode 12 als Kompensations-LED zur Erzeugung des kompensierenden, modulierten Lichtsignals ausgebildet. Die Kompensations-LED 12 sendet damit das weitere modulierte Lichtsignal aus, wobei der Durchschnittsstrom der als Sende-LED 10 ausgebildeten Leuchtdiode und der Durchschnittsstrom der Kompensations-LED mittels einer Regelung stets etwa gleich groß geregelt sind. Wie erläutert können weitere Sende-LEDs oder Empfänger bedarfsweise vorgesehen sein, sofern eine entsprechend gleichmäßig gestaltete Stromzufuhr zu den Sende-LEDs sichergestellt ist.

Der Begriff Leuchtdiode wird im Rahmen dieser Anmeldung als Synonym für Lichtquellen verwendet, die alterungs- und/oder temperaturabhängig ihre Eigenschaften verändern. Anstelle von Leuchtdioden kann insofern insbesondere auch eine Laser-Diode oder ein Laser verwendet werden.

Vorzugsweise ist das modulierte Lichtsignal gegenüber dem weiteren, ständig nachgeregelten und modulierten Lichtsignal phasenversetzt. Bei gleicher Modulation ist bei einer Sende-LED 10 und einer Kompensations-LED der Phasenversatz idealerweise 180°. Das modulierte Lichtsignal der wenigstens einen Leuchtdiode 10 wird von einem Objekt reflektiert, rückgestreut oder durch einen Transmissionsbereich transmittiert.

Zur Eliminierung der alterungsbedingten Zustandsänderungen werden gemäß Fig. 1 die zeitlichen Mittelwerte der Sende-LED 10 und der Kompensations-LED 12 hier über je einen Stromspiegel 19, 20 getrennt erfasst und nach jeweiliger Tiefpassfilterung 21, 22 miteinander verglichen. Ohne weitere Maßnahmen wird der zeitliche Mittelwert des Stroms der Kompensations-LED 12 in der Regel geringer sein als der Strom der Sende-LED 10. Dieser Unterschied wird zur Regelung eines zusätzlichen Gleichstromanteiles in der Kompensations-LED 12 ausgewertet. Die Regelung 24, 25 tritt so lange in Aktion, bis beide Mittelwerte der Ströme in LED 10 und LED 12 den gleichen Wert haben. Bei einem zusätzlichen Gleichstrom durch die Kompensations-LED 12 wird der ausgesandte pulsförmige Lichtanteil nicht beeinflusst. Der geregelte, zusätzliche Gleichlichtanteil führt jedoch zu gleicher Alterung, bzw. bei gleicher Gehäusetemperatur zu einem thermisch gleichen Verhalten von LED 10 und LED 12. Der ausgesandte Gleichlichtanteil hat aber andererseits keinen Einfluss auf die Messung, da er Fremdlicht gleichzusetzen ist, das ja bekanntlich keinen Einfluss auf die Messung hat. Somit ist ein Einfluss von Alterung und Temperatur auf die Messstrecke nahezu ausgeschlossen.

In Fig. 1 wurde der Sende-LED 10 und der Kompensations-LED 12 je ein eigener, zueinander entgegengesetzt geregelter Gleichstromanteil zugeführt. Dies ist sinnvoll, wenn die Sendeleistung der Sende-LED 10 unter die Sendeleistung der Kompensations-LED 12 geregelt werden kann, z.B. bei einer symmetrischen Anordnung von Sende-LED und Kompensations-LED gegenüber einem reflektiven Element.

Bei einer periodisch unterbrochenen Messung kann an Stelle des geregelten Gleichstroms auch ein gepulster Strom treten. Dabei ist zu gewährleisten, das der zusätzliche gepulste Strom nicht in die Messperiode fällt, um Fehlmessungen zu vermeiden. Diese Anordnung kann gewählt werden, wenn eine Alterung nicht nur vom Durchschnittsstrom abhängt, sondern auch von einer Spitzenleistung. Wichtig ist jedoch, wie bereits beschrieben, dass beide LED-Ströme im Durchschnitt gleich sind, um den Effekt der Alterung und den Temperatureinfluss auszuschließen.

In einigen Fällen kann es vorkommen, das eine erste konstante, nicht veränderliche Reflexion an einer Oberfläche stattfindet. Zu detektieren ist aber eine zweite, wesentlich kleinere Reflexion, z.B. bei einem langsam auftretenden Belag.

Einen Großteil der Regeldynamik der Lichtimpulsleistung der Kompensations-LED wird nun für das Erreichen des statischen Wertes zur Kompensation der ersten, nicht veränderlichen Reflexion verwendet. Die eigentliche Regelung für die zweite, kleinere Reflexionsänderung spielt sich bei auftretenden Belag in einem sehr kleinen Bereich der Regeldynamik ab. Wünschenswert ist aber eine gute Ausnutzung der Regeldynamik, um auch kleinste Änderungen der zweiten, kleineren Reflexionsänderung deutlich zu erfassen. Dies wiederum bedeutet, das der gesamte Regelumfang möglichst nur für die zweite, kleinere Reflexion zur Verfügung stehen soll.

Dazu wird parallel zur eigentlichen Regelung ein zweiter, fest eingestellter Regelwert zur LED-Leistungsregelung eingesetzt. Dieser Wert berücksichtigt die erste, unveränderliche Reflexion und braucht daher nicht geregelt zu werden. Eine Regelung dieses Wertes macht jedoch Sinn, wenn z.B. der Regelwert der zweiten, kleineren Reflexion Werte erreicht, bei denen er aus dem Regelbereich herausfallen könnte. Weiterhin kann dieser zweite Regelwert genutzt werden, um z.B. den ersten Regelwert zu referenzieren. Dies kann z.B. notwendig werden, wenn bei einer gegebenen Reflexion eine weitere Reflexion zu erwarten ist und hierbei der möglichst volle Dynamikbereich der Regelung genutzt werden soll. Dann kann durch Änderung des zweiten Regelwertes der erste Regelwert auf einen vorbestimmten Wert gesetzt werden.

Im Folgenden wird die in Fig. 1 dargestellte Schaltung beschrieben. Fig. 1 stellt als Ausführungsbeispiel eine komplette optische Regelschleife mit Alterungs- und Temperaturkompensation dar. Weiterhin wird in der Schaltung auch eine Voreinstellung eines ersten, festen Kompensationswertes ermöglicht.

Taktgenerator 9 erzeugt eine z.B. rechteckförmige Signalspannung. Am Ausgang der Signalinvertierungsstufe 11 steht ein nicht invertiertes und ein invertiertes Signal an. Das nicht invertierte Signal wird über Treiberstufe 17 und Regelstufe 16 und über die Additionsstufe 18 der Sende-LED 10 zugeführt. Mittels Stromspiegel 20 kann der LED-Strom erfasst werden. Die Regelstufe 16 ist nicht unbedingt notwendig, kann jedoch bei großen Reflexionsänderungen den Dynamikbereich der optischen Erfassung vergrößern. Die Sende-LED 10 sendet einen getakteten Lichtstrahl 33 als Lichtsignal aus, das im Ausführungsbeispiel eine zumindest für die von der Sende-LED ausgesandte Strahlung translucente Scheibe 35 durchdringt und an der Oberfläche an den Partikeln des Belags 36 reflektiert wird.

Das invertierte Signal der Signalinvertierungsstufe 11 wird über die Treiberstufe 15, der Regelstufe 14 und der Additionsstufe 13 der Kompensations-LED 12 zugeführt, die damit die Lichtstrecke 12a erzeugt. Mittels eines zweiten Stromspiegels 19 kann der Strom der Kompensations-LED erfasst werden.

Die Photodiode 1 empfängt den reflektierten Lichtstrahl 34. Zur Photostromkompensation kann in der Schaltungsanordnung 2 ein Vorwiderstand, ein Gyrator, eine Induktivität oder ähnliches verwendet werden. An Stelle der Photodiode kann auch eine entsprechend betriebene Leuchtdiode verwendet werden.

Der Hochpass 3 trennt die hochfrequenten Signalspannungen von der Gleichlichtsignalspannung. Nach entsprechender Verstärkung im Vorverstärker 4 erzeugt der Synchrondemodulator 5 an seinen Ausgängen zwei Signalanteile, die jeweils den Lichtstrecken 12a und dem hier vom Objekt kommenden oder aus einem Transmissionsbereich kommenden Lichtstrahl 34 zugeordnet sind. Die an den Ausgängen des Synchrondemodulators 5 noch vorhandenen höherfrequenten Signalanteile werden in den Tiefpassfiltern 6 und 7 abgeschnitten, die so bereinigten Einzelsignale der Lichtstrecken 12a und 33/34 werden dem Vergleicher 8 zugeführt. Dieser kann z.B. ein Operationsverstärker sein. An seinen Ausgängen stehen zwei Regelsignale an, die zueinander invertiert sind. Mit dem ersten Regelsignal wird über die Additionsstufe 37 die Regelstufe 14 zur Steuerung der Kompensations-LED 12 angesteuert. Mit dem zweiten Regelsignal wird die Regelstufe 16 zur Steuerung der Sende-LED 10 angesteuert. Bei so geschlossener Regelschleife regeln sich die beiden Lichtleistungen 12a und 34 in der Art, das beide Ausgangssignale des Synchrondemodulators 5 im Wesentlichen genau gleich sind, also zueinander im Wesentlichen keinen Unterschied aufweisen.

Die Regelung wird entsprechend schnell nachgeführt, so dass schon kleinste Abweichungen der beiden Lichtstrecken zueinander sofort verzögerungsfrei ausgeregelt werden. Dies bedeutet, das an der Photodiode 1 kein taktsynchrones Wechselsignal anliegt, die Schaltung somit für Fremdlicht unempfindlich ist.

Das Ausgangssignal 32 für den Belag 36 wird mittels des Vergleichers 29, der z.B. ein bedämpfter Operationsverstärker sein kann, aus den beiden an den Ausgängen des Synchrondemodulators 5 anstehenden Regelsignalen gebildet.

Die Regelung der Sende-LED 10 ist nicht unbedingt notwendig, sie kann auch auf einen festen Wert gesetzt werden. In diesem Fall wird nur die Kompensations-LED geregelt.

In dieser Anordnung kann eine Veränderung der Reflexion an einem Belag 36 sehr genau detektiert werden, ohne dass Fremdlicht einen Einfluss hat.

In der Praxis wird die Sende-LED 10 in der Regel mit einer höheren Leistung senden als die Kompensations-LED 12. Da die Lichtstrecke 12a direkt von der Kompensations-LED 12 zur Photodiode 1 führt, benötigt die Kompensations-LED eine geringere Leistung als die Sende-LED, die das Licht in eine wesentlich längere Messstrecke schickt. Dadurch kommt es bei der Sende-LED zu einer deutlich früheren Alterung als bei der Kompensations-LED. Eine frühere Alterung der Sende-LED 10 würde jedoch zu einer Veränderung des Ausgangssignals 32 führen.

Um dies zu verhindern, wird an der Sende- sowie der Kompensations-LED über je eine Strommessschaltung in Form eines Stromspiegels 19, 20 der aktuelle Sendestrom ermittelt. Die Ausgangswerte dieser Stromspiegel werden in den Tiefpassfiltern 21, 22 von den hochfrequenten Anteilen des Sendetaktsignales befreit. An ihren Ausgängen steht je ein Wert an, der dem zeitlichen Mittelwert des Stromes durch die jeweilige LED entspricht. Im Vergleicher 23 werden beide Mittelwerte miteinander verglichen. Der Vergleicher 23 gibt an zwei gegeneinander invertierten Ausgängen je ein Steuersignal für die Regelstufen 24, 25 aus. Diese Regelstufen addieren aus einer Stromquelle 26,27, vorzugsweise einer Gleichstromquelle über die Additionsstufe 13 und 18 je einen Gleichstrom zusätzlich zur Signalstrom zu den LEDs. Wird nur eine LED geregelt, ist auch nur eine Regelstufe erforderlich. Diese Regelung ist so ausgelegt, dass sie den zeitlichen Mittelwert des Stroms der Sende-LED 10 und der Kompensations-LED 12 möglichst auf exakt gleichem Wert hält. Dadurch wird gewährleistet, das beide LEDs gleich schnell altern. Weiterhin führt der gleiche Durchschnittsstrom zu gleichem Temperaturverhalten.

Im Ausführungsbeispiel ist in FIG. 1 eine weitere Additionsstufe 37 enthalten. Mit ihr wird gesteuert von der Steuereinheit 30 zu wenigstens einer der geregelten Lichtstrecken, in die eines der modulierten Lichtsignale eingestrahlt wird, ein weiterer Wert unabhängig von der Regelschleife der Regelung zur Kompensation des Fremdlichts hinzuaddiert wird, der das Ausgangssignal 32 beeinflusst. Der weitere Wert kann als fester Wert für die Kompensations-LED 12 zusätzlich zum variablen Wert aus dem Vergleicher 8 vorgegeben werden. Mit diesem fest vorgegebenen Wert kann der variable Wert referenziert werden. Im Ausführungsbeispiel wird der fest vorgegebene Wert z.B. so eingestellt, das bei fehlendem Belag 36 auf der Scheibe 35 der variable Wert 32 einen vorgegebenen Wert z.B. 1 V erhält. Bei sich niederschlagendem Belag auf der Scheibe 35 kann dann dieser Wert z.B. bis auf z.B. 3 V ansteigen. Der weitere Wert kann jedoch auch in Abhängigkeit weiterer Parameter nachgeregelt werden.

Die Steuereinheit 30 erhält weiterhin vom Vergleicher 29 das Ausgangssignal 32. Bei einer Über- oder Unterschreitung des Ausgangssignals 32 über oder unter einem vorgegebenen Wert kann der Additionsstufe 37 ein korrigiertes Additionssignal zugeführt werden.

### Bezugszeichen:

- 1: Photodiode
- 2: Photostromkompensation
- 3: Hochpass
- 4: Vorverstärker
- 5: Synchrondemodulator
- 6: Tiefpassfilter
- 7: Tiefpassfilter
- 8: Vergleicher
- 9: Taktgenerator
- 10: Sende-LED
- 11: Signalinvertierstufe
- 12: Kompensations-LED
- 13: Additionsstufe
- 14: Regelstufe
- 15: invertierende Treiberstufe für Wechselsignale
- 16: Regelstufe
- 17: Treiberstufe für Wechselsignale
- 18: Additionsstufe
- 19: Stromspiegel
- 20: Stromspiegel
- 21: Tiefpassfilter
- 22: Tiefpassfilter
- 23: Vergleicher
- 24: Stromregler
- 25: Stromregler
- 26: Stromquelle für Gleichstrom
- 27: Stromquelle für Gleichstrom
- 28: (entfallen)
- 29: Vergleicher
- 30: Steuereinheit
- 31: Dynamik-korrigiertes Ausgangssignal
- 32: Ausgangssignal
- 33: Getakteter Lichtstrahl
- 34: reflektierter Lichtstrahl
- 35: (translucente) Scheibe
- 36: Belag
- 37: Additionsstufe

## Patentansprüche

1. Verfahren zum Messen eines modulierten Lichtsignals, mit einer Anordnung mit wenigstens einer das Lichtsignal aussendenden Leuchtdiode (10,12) und wenigstens einem Empfänger (1) zum Empfang des Lichtsignals, wobei das Lichtsignal der Leuchtdioden mit einem weiteren modulierten Lichtsignal so kompensiert wird, dass am Empfänger (1) im Wesentlichen ein Gleichlichtsignal ansteht,
**dadurch gekennzeichnet, dass** der zeitliche Mittelwert des Stroms, der zur Erzeugung des weiteren modulierten Lichtsignals erforderlich ist, und/oder der zeitliche Mittelwert desjenigen Stroms, der der wenigstens einen Leuchtdiode (10) zugeführt wird, so verändert wird, dass sich die zeitlichen Mittelwerte im Wesentlichen entsprechen.

2. Verfahren nach Anspruch 1, **dadurch gekennzeichnet, dass** zu dem Strom, der der wenigstens einen Leuchtdiode (12) zur Erzeugung des kompensierenden, modulierten Lichtsignals zugeführt wird, ein zweiter, vorzugsweise nicht modulierter Strom hinzuaddiert wird.

3. Verfahren nach Anspruch 1 oder 2, **dadurch gekennzeichnet, dass** eine Kompensations-LED (12) das weitere modulierte Lichtsignal aussendet, und dass der zeitliche Mittelwert des Stroms der als Sende-LED (10) ausgebildeten Leuchtdiode und der zeitliche Mittelwert des Stroms der Kompensations-LED (12) mittels einer Regelung stets gleich groß geregelt ist.

4. Verfahren nach einem der vorhergehenden Ansprüche, **dadurch gekennzeichnet, dass** der zweite Strom ein dem Taktstrom des Regelsignals für die Ausgangsleistung der Leuchtdioden (10,12) zur Kompensation von Fremdlicht überlagerter Gleichstrom ist und/oder ein vorzugsweise in Messpausen der jeweiligen Leuchtdiode zugeführter gepulster Strom ist.

5. Verfahren nach einem der vorhergehenden Ansprüche, **dadurch gekennzeichnet, dass** für die Leuchtdioden (10,12) gesondert ein zeitlicher Mittelwert des Stroms bestimmt wird und dass die so bestimmten Mittelwerte in einem Vergleicher (23) zur Bestimmung des wenigstens einen zweiten Stroms verglichen werden.

6. Verfahren nach einem der vorhergehenden Ansprüche, **dadurch gekennzeichnet, dass** zu wenigstens einer geregelten Lichtstrecke, in die eines der modulierten Lichtsignale eingestrahlt wird, ein weiterer Wert unabhängig von der Regelschleife der Regelung hinzuaddiert wird, der das Ausgangssignal (32) beeinflusst und/oder der zur Referenzierung des Ausgangssignals (32) einstellbar oder regelbar ist.

7. Verfahren nach Anspruch 6, **dadurch gekennzeichnet, dass** bei einer Über- oder Unterschreitung eines vorgegebenen Werts des Ausgangssignals (32) dem variablen Regelungswert ein fester Wert zur Korrektur zugeführt wird.

8. Anordnung zum Messen eines modulierten Lichtsignals, mit wenigstens einer das Lichtsignal aussendenden Leuchtdiode (10,12) und wenigstens einem Empfänger (1) zum Empfang des Lichtsignals, sowie mit einer Regelung, mit der das Lichtsignal der Leuchtdioden mit einem weiteren modulierten Lichtsignal so kompensiert wird, dass am Empfänger im Wesentlichen (1) ein Gleichlichtsignal ansteht,
**dadurch gekennzeichnet**, das der zeitliche Mittelwert des Stroms, der zur Erzeugung des weiteren modulierten Lichtsignals erforderlich ist, und/oder der zeitliche Mittelwert desjenigen Stroms, der der wenigstens einen Leuchtdiode (10) zugeführt wird, einander im Wesentlichen entsprechen.

9. Anordnung nach Anspruch 8, **dadurch gekennzeichnet, dass** eine Kompensations-LED (12) zum Aussenden des weiteren modulierten Lichtsignals vorgesehen ist.

10. Anordnung nach Anspruch 8 oder 9, **dadurch gekennzeichnet, dass** der zeitliche Mittelwert des Stroms der als Sende-LED (10) ausgebildeten Leuchtdiode und der zeitliche Mittelwert des Stroms der Kompensations-LED mittels einer Regelung stets gleich groß sind.

11. Anordnung nach einem der vorhergehenden Ansprüche 8 bis 10, **dadurch gekennzeichnet, dass** ein Vergleicher (23) zum Vergleich der zeitlichen Mittelwerte vorgesehen ist, von dem Signale an Regelstufen (24,25) zur Zuführung des zweiten Stroms von einer Stromquelle (26,27) zu den Leuchtdioden übermittelt sind.

12. Anordnung nach einem der vorhergehenden Ansprüche 8 bis 11, **dadurch gekennzeichnet, dass** eine Additionsstufe (37) vorgesehen ist, die zu wenigstens einer geregelten Lichtstrecke, in die eines der modulierten Lichtsignale eingestrahlt wird, einen weiteren Wert unabhängig von der Regelschleife der Regelung hinzuaddiert, der das Ausgangssignal (32) beeinflusst und/oder der zur Referenzierung des Ausgangssignals (32) einstellbar oder regelbar ist.
